# EUROPÄISCHE PATENTSCHRIFT

(11) **EP 0 492 465 B1**
(45) Veröffentlichungstag und Bekanntmachung des Hinweises auf die Patenterteilung: **31.08.1994**
(21) Anmeldenummer: 91121846.9
(22) Anmeldetag: 19.12.1991
(51) Int. Cl.: B65G 47/61

(54) **Selbsttätige Beladevorrichtung für eine Hängefördervorrichtung**
Automatic loading device for an overhead conveyor system
Dispositif de chargement automatique pour un système de convoyeur aérien

(30) Priorität: 28.12.1990 DE 9017548 U
(43) Veröffentlichungstag der Anmeldung: 01.07.1992
(73) Patentinhaber: Gärtner, Franz, D-97656 Oberelsbach (DE)
(72) Erfinder: Gärtner, Franz, D-97656 Oberelsbach (DE)
(74) Vertreter: Patentanwälte Dr. Solf & Zapf

(56) Entgegenhaltungen:
- EP-A- 0 164 109
- DE-A- 3 902 712
- DE-C- 3 934 995

## Beschreibung

Die Erfindung betrifft eine selbsttätige Beladevorrichtung für eine Hängefördervorrichtung für die innerbetriebliche Hängeförderung in der Bekleidungsindustrie mit Laufschienen und darauf verschiebbaren, die Laufschienen von unten umgreifenden Tragbügeln, wobei mindestens zwei Tragbügel Teile eines Tragwagens sind und wobei zur Abstützung auf der Laufschiene jeweils zwei zueinander schräg gestellte Laufrollen an den Tragbügeln angeordnet sind und zum selbsttätigen Transportieren der Tragwagen z.B. ein endlos umlaufendes, angetriebenes Zugelement vorgesehen ist, das mit an den Tragbügeln angeordneten Kupplungselementen die selbsttätige Mitnahme bewirkt.

Eine Hängefördervorrichtung der angegebenen Art ist aus der EP-B-0 164 109 bekannt. In der Bekleidungsindustrie gibt es noch keine selbsttätig arbeitende Beladevorrichtung für die bekannten Tragwagen, die auf Bügeln hängende Bekleidungsstücke, die z.B. in der Kleiderfabrik hergestellt und in einer Eintütstation verpackt worden sind und anschließend auf Tragwagen gesammelt weitertransportiert werden sollen, problemlos auf die Tragwagen übergibt.

Eine Vorrichtung zum Entladen eines Förderwagens ist aus DE-A-3 934 995 bekannt, wobei diese eine um eine vertikale Achse verschwenkbare Schnecke aufweist.

Aufgabe der Erfindung ist, eine selbsttätig arbeitende, einfach aufgebaute Beladevorrichtung zu schaffen, die Kleiderbügel auf Tragwagen der genannten Art übergibt.

Diese Aufgabe wird durch die Merkmale des Anspruchs 1 gelöst. Vorteilhafte Weiterbildungen der Erfindung werden in den Unteransprüchen gekennzeichnet. Anhand der Zeichnung wird die Erfindung im folgenden beispielhaft näher erläutert. Es zeigen:
- Fig. 1: schematisch teilweise im Querschnitt die wesentlichsten Teile einer Transportvorrichtung;

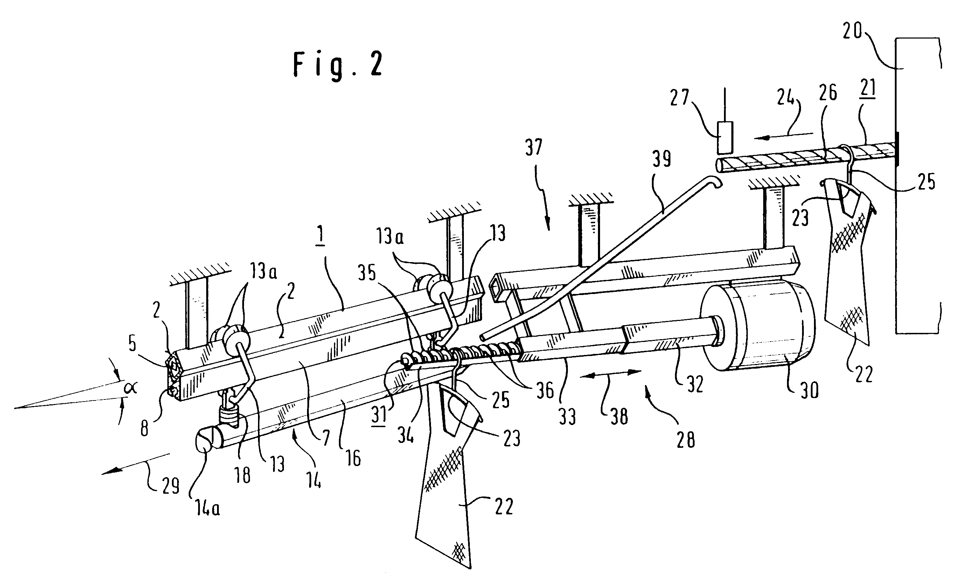

- Fig. 2: perspektivisch die Beladevorrichtung.

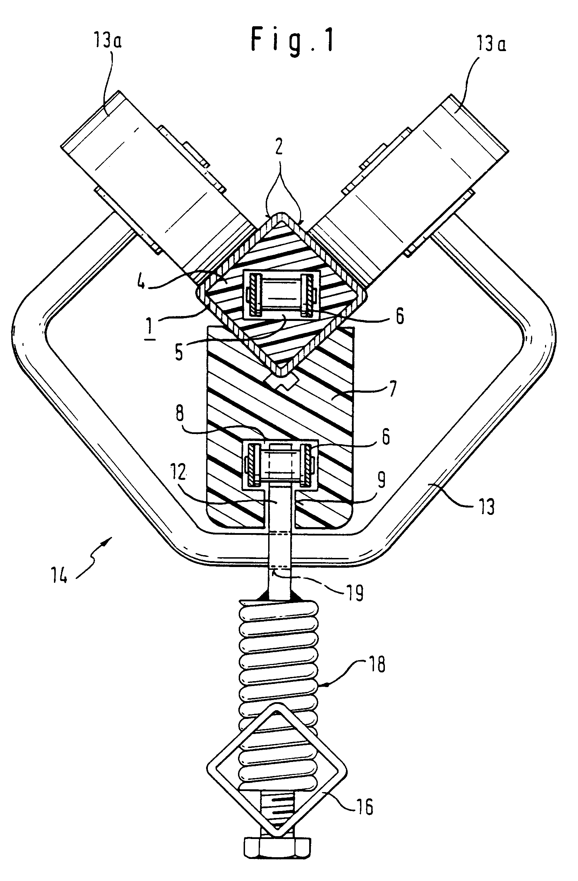

Die Abbildung in Fig. 1 zeigt eine vorteilhafte, mögliche Transportvorrichtung, die mit der erfindungsgemäßen Beladevorrichtung zusammenwirkt. Sie weist eine Tragschiene 1 mit zueinander dachförmig gewinkelten Laufflächen 2 auf. Die Tragschiene 1 besteht aus einem Vierkantrohr; sie kann aber auch lediglich ein Winkelprofil sein oder ein Rundrohr oder dergleichen. Das Vierkantrohr ist mit Kunststoff 4 ausgefüllt. Im Kunststoff befindet sich ein Längskanal 5. Im Kanal 5 wird formschlüssig der obere Trum der Kette 6 geführt. Dargestellt ist eine Gallkette. Wenn eine Gliederkette benutzt werden soll, ist die Querschnittsform des Kanals 5 entsprechend ausgebildet. An Stelle der Auskleidung des Vierkantrohres mit Kunststoff und der Führung der Kette in dem Kanal 5 kann vorgesehen sein, die Kette mit entsprechenden Führungsmitteln oder ohne Führungsmittel oberhalb der Tragschiene 1 zurückzuführen. Unterhalb der Tragschiene 1 sitzt befestigt eine Kunststoffschiene 7. In die Kunststoffschiene 7 ist ein Längskanal 8 eingebracht, der einen nach unten offenen Längsschlitz 9 aufweist. Im Längskanal 8 wird formschlüssig der untere Trum der Kette 6 geführt. Ist eine Gliederkette vorgesehen, ist die Querschnittsform des Kanals 8 wie beim Kanal 5 zur formschlüssigen Führung entsprechend ausgebildet. Die Kette läuft über ein angetriebenes und ein mitlaufendes Kettenrad, die sich jeweils frontal vor der Kunststoffschiene 7 befinden. Die Kettenräder sind in an sich bekannter Weise in entsprechenden, in der Laufschiene 1 angeordneten Schlitzen gelagert, so daß die Trums der Kette 6 in die Längskanäle 5,8 eingeführt werden können. Jede Kette - ob Gall- oder Gliederkette - hat Öffnungen, in die Stifte 12 des Tragwagens 14 für die Mitnahme eingreifen können. Der Tragwagen 14 besteht aus einem horizontalen Tragsteg 16, der ein Vierkantrohr ist, das auf eine Kante gestellt angeordnet ist. Vorne und hinten ist je ein vertikal ausgerichtetes Loch eingebracht. In jedem Loch sitzt befestigt und formschlüssig vorzugsweise ein runder Mitnahmesteg 18, der den horizontalen Tragsteg 16 nach oben überragt und um eine vertikale Achse drehbar gelagert ist. Im oberen freien Endbereich des Mitnahmestegs 18 ist der Mitnahmestift 12 angeordnet. Unterhalb des Mitnahmestifts 12 ist ein Querloch 19 in den Mitnahmesteg 18 eingebracht, das vom Tragbügel 13 frei durchgriffen wird, so daß der Tragbügel 13 im Querloch 19 um eine horizontale Achse schwenkbar gelagert ist. An den freien Endbereichen des Tragbügels 13 sitzen zwei zueinander schräg gestellte Laufrollen 13a, die auf den Laufflächen 2 der Tragschiene 1 abrollen. Der Tragwagen 14 verfügt beidendig zudem über eine selbsttätig arbeitende Kupplung 14a, so daß mehrere Tragwagen 14 zu einem Zug zusammensetzbar sind (nicht dargestellt). Mit der beschriebenen Transportvorrichtung kann der Transportwagen 14 mit vorgegebener Geschwindigkeit transportiert werden. Für die erfindungsgemäße Beladevorrichtung kann aber auch jede andere Transportvorrichtung verwendet werden, die einen Transportwagen mit gleichmäßiger Geschwindigkeit transportiert.

An die Tragschiene 1 sind beidendig weitere Vierkantrohrschienen der innerbetrieblichen Hängefördervorrichtung angeschlossen (nicht dargestellt), die zu weiteren Stationen, z.B. zum Auslieferungslager führen.

Die erfindungsgemäße Beladevorrichtung ist im dargestellten Beispiel einer automatisch arbeitenden Eintütstation 20 nachgeordnet, aus der auf einer Schnecke 21 mit Kleidern 22 behängte Bügel 23 in Pfeilrichtung 24 befördert werden, wobei die Bügelhaken 25 in den Rillen 26 der Schnecke 21 gleiten. Am freien Ende der Schnecke 21 ist eine schematisch dargestellte Stopstation 27 angeordnet, die den Transport der Bügel 23 unterbrechen kann. Das freie Ende der Transportschnecke 21 endet ein Stück seitlich vor der Transportvorrichtung, wobei im Zwischenraum zwischen der Schnecke 21 und der Transportvorrichtung die Beladevorrichtung 28 angeordnet ist. Die Beladevorrichtung ist seitlich in einem Winkel α zum Tragwagen 14 angeordnet, und zwar in einem spitzen Winkel bezüglich der Transportrichtung 29. Die Beladevorrichtung weist einen Motor 30 auf, der horizontal angeordnet ist und dessen Welle mit einer Schnecke 31 gekoppelt ist. Am Ausgang der Welle des Motors 30 ist ein Teleskop-Vierkantrohr 32 angesetzt, das teleskopartig ein Trag-Vierkantrohr 33 übergreift. Aus dem Tragrohr 33 ragt die Schnecke 31 ein Stück heraus, wobei das freie Ende der Schnecke 31 sich im Bereich des Zwischenraums zwischen der Transportvorrichtung und dem Tragsteg 16 befindet. Die Schnecke 31 lagert auf einem eine Führungslängsrille für die Schnecke 31 aufweisenden Kunststoffstab 34, der das Tragrohr 33 und das Teleskop-Vierkantrohr 32 durchsetzt und am Motor sitzt. Die Steigung der Windungen 35 der Schnecke 31 steht im rechten Winkel zur Längsachse des Tragstegs 16, so daß die zwischen den Windungen aufgenommenen Bügelhaken 25 eine entsprechend senkrechte Ausrichtung zur Längsachse des Tragstegs 16 haben. Die Rille 36 zwischen den Windungen 35 der Schnecke 31 ist so tief, daß die Bügel nicht von einer Rille in die andere überspringen können. Das Tragrohr 33 lagert an einem ortsfesten Gestell 37, wobei der Motor 30 über nicht dargestellte Gleitführungselemente und eine Kolbenzylinderanordnung ebenfalls mit dem Traggestell 37 in Verbindung steht, derart, daß der Motor 30 in Doppelpfeilrichtung 38 verschoben werden kann. Dabei wird das Teleskop-Vierkantrohr 32 teleskopartig über das Tragrohr 33 geschoben und die Kunststoffschiene 34 mit der Schnecke 31 führt die gleiche Bewegung wie der Motor 30 aus.

Das freie Ende der Schnecke 21, das oberhalb des Motors 30 angeordnet ist, steht mit dem motorseitigen, freiliegenden Bereich der Schnecke 31 über eine Gleitstange 39 in Verbindung, die schräg nach unten verläuft und Bügel 23, die vom freien Ende der Schnecke 21 abgleiten, auffängt, wobei die Bügel 23 auf der Gleitstange 39 bis auf die Schnecke 31 rutschen können. Die Bügelhaken 25 der Bügel 23 werden dann von der sich drehenden Schnecke 31 aufgenommen und zum freien Ende der Schnecke 31 transportiert, von dem sie, wenn sich der Motor 30 in vorderster Belade-Stellung befindet, auf den Tragsteg 16 herabfallen. Da der Tragwagen 14 kontinuierlich in Transportrichtung 29 befördert wird und laufend Kleiderbügel 23 von der Schnecke 31 auf den Tragsteg 16 geliefert werden, wird der Tragwagen 14 gefüllt. Ist der Tragwagen 14 voll, wird die Zufuhr der Kleiderbügel 23 durch die Stopeinrichtung 27 abgestoppt, der Motor 30 abgeschaltet und zurückgezogen, so daß der freie Endbereich der Schnecke 31 aus dem Transportweg der Mitnahmestege 18 gezogen wird und den Weitertransport des Tragwagens 14 nicht behindert. Sobald ein neuer, freier Tragwagen zur Beladestation gelangt, wird der Motor 30 mit der Schnecke und dem Führungssteg 34 wieder vorgeschoben, so daß die Bügelhaken 25 senkrecht nach unten auf den Tragsteg 16 fallen können.

Somit gelingt es nach der Erfindung, eine mit einfachen Mitteln arbeitende Beladevorrichtung zur Verfügung zu stellen, die störunanfällig ist, genau arbeitet und die Bügelhaken derart auszurichten vermag, daß sie beim Herabfallen auf den Tragsteg 16 die gewünschte erforderliche Stellung einnehmen. Da die Bügelhaken nicht aus den Rillen 36 der Schnecke 31 rutschen können, übt das ankommende Kleidungsstück 22 auf das bzw. die bereits auf der Tragstange 16 abgehängten Kleidungsstücke 22 einen Schub aus, bevor sein Bügel von der Schnecke 31 fällt, so daß die Kleidungsstücke 22 auf der Tragstange 16 zusammengeschoben werden und der Tragwagen 14 optimal vollgefüllt werden kann. Dabei kann die Transportgeschwindigkeit des Tragwagens 14 auf die Anliefergeschwindigkeit der Schnecke 31 entsprechend eingestellt werden.

## Patentansprüche

1. Beladevorrichtung für eine Hängefördervorrichtung für die innerbetriebliche Hängeförderung in der Bekleidungsindustrie mit Laufschienen (1) und darauf verschiebbaren, die Laufschienen von unten umgreifenden Tragbügeln (13), wobei mindestens zwei Tragbügel Teile eines, einen horizontalen Tragsteg (16) aufweisenden Tragwagens (14) sind und wobei zur Abstützung auf der Laufschiene (1) jeweils zwei zueinander schräg gestellte Laufrollen (13a) an den Tragbügeln (13) angeordnet sind und zum selbsttätigen Transportieren der Tragwagen (14) eine Transportvorrichtung vorgesehen ist, die mit an den Tragbügeln (13) angeordneten Kupplungselementen (12) die selbsttätige Mitnahme bewirkt,
dadurch **gekennzeichnet,**
daß die Beladevorrichtung eine angetriebene Schnecke (31) aufweist, die seitlich in einem spitzen Winkel bezüglich der Transportrichtung (29) zum Tragwagen (14) angeordnet ist, wobei das freie Ende der Schnecke (31) sich im Bereich oberhalb des Tragstegs (16) des Tragwagens (14) befindet und wobei die Schnecke (31) vor und zurück verschiebbar angeordnet ist.

2. Beladevorrichtung nach Anspruch 1,
dadurch **gekennzeichnet,**
daß sie einen Motor (30) aufweist, der horizontal angeordnet ist und dessen Welle mit der Schnecke (31) gekoppelt ist.

3. Beladevorrichtung nach Anspruch 1 und/oder 2,
dadurch **gekennzeichnet,**
daß am Ausgang der Welle des Motors (30) ein Teleskop-Vierkantrohr (32) angesetzt ist, das teleskopartig ein Trag-Vierkantrohr (33) übergreift, wobei aus dem Tragrohr (33) die Schnecke (31) ein Stück herausragt und das Tragrohr (33) an einem Traggestell (37) lagert.

4. Beladevorrichtung nach einem oder mehreren der Ansprüche 1 bis 3,
dadurch **gekennzeichnet,**
daß die Schnecke (31) auf einem, eine Führungslängsrille für die Schnecke (31) aufweisenden Kunststoffstab (34) lagert, der das Tragrohr (33) und das Teleskop-Vierkantrohr (32) durchsetzt und am Motor sitzt.

5. Beladevorrichtung nach einem oder mehreren der Ansprüche 1 bis 4,
dadurch **gekennzeichnet,**
daß die Steigung der Windungen (35) der Schnecke (31) im rechten Winkel zur Längsachse des Tragstegs (16) des Tragwagens (14) angeordnet ist, so daß die zwischen den Windungen (35) aufgenommenen Bügelhaken eine entsprechend senkrechte Ausrichtung zur Längsachse des Tragstegs (16) haben.

6. Beladevorrichtung nach einem oder mehreren der Ansprüche 1 bis 5,
dadurch **gekennzeichnet,**
daß die Rille (36) zwischen den Windungen (35) der Schnecke (31) so tief ist, daß die Bügel (23) nicht aus der Rille gedrückt werden können.

7. Beladevorrichtung nach einem oder mehreren der Ansprüche 1 bis 6,
dadurch **gekennzeichnet,**
daß der Motor (30) in Richtung der Längsachse der Schnecke (31) verschiebbar gelagert ist, wobei die Schnecke (31) mit dem Motor starr gekoppelt ist.

8. Beladevorrichtung nach Anspruch 7,
dadurch **gekennzeichnet,**
daß das Teleskop-Vierkantrohr (32) teleskopartig auf dem Tragrohr (33) verschiebbar gelagert ist, wobei die Kunststoffschiene (34) mit der Schnecke (31) die gleiche Bewegung wie der Motor (30) ausführen.

9. Beladevorrichtung nach einem oder mehreren der Ansprüche 1 bis 8,
dadurch **gekennzeichnet,**
daß der motorseitige, freiliegende Bereich der Schnecke (31) über eine Gleitstange (39), die schräg nach oben verläuft, mit einer Bügel-Zuführeinrichtung (21) in Verbindung steht.

## Claims

1. Loading apparatus for a suspended conveying apparatus for suspended conveying within the operation of the clothing industry, having running rails (1) and, displaceable thereon, carrier brackets (13) which grip around the running rails from below, at least two carrier brackets forming part of a carrier carriage (14) having a horizontal carrier web (16), and for the purpose of support on the running rail (1) in each case two running rollers (13a) positioned obliquely with respect to one another being arranged on the carrier brackets (13) and for the purpose of automatic transportation of the carrier carriages (14) there being provided a transporting apparatus which performs automatic entrainment together with coupling elements (12) arranged on the carrier brackets (13), characterized in that the loading apparatus has a driven screw (31) which is arranged laterally at an acute angle to the carrier carriage (14) with respect to the direction (29) of transportation, the free end of the screw (31) being in the region above the carrier web (16) of the carrier carriage (14) and the screw (31) being arranged such that it is displaceable back and forth.

2. Loading apparatus according to Claim 1, characterized in that it has a motor (30) which is arranged horizontally and whereof the shaft is coupled to the screw (31).

3. Loading apparatus according to Claim 1 and/or 2, characterized in that there is attached to the output of the shaft of the motor (30) a telescopic rectangular tube (32) which reaches in the manner of a telescope over a carrier rectangular tube (33), the screw (31) projecting somewhat out of the carrier tube (33) and the carrier tube (33) being mounted on a carrier frame (37).

4. Loading apparatus according to one or more of Claims 1 to 3, characterized in that the screw (31) is mounted on a plastics rod (34) which has a longitudinal guidance groove for the screw (31) and which passes through the carrier tube (33) and the telescopic rectangular tube (32) and is seated on the motor.

5. Loading apparatus according to one or more of Claims 1 to 4, characterized in that the pitch of the windings (35) of the screw (31) is arranged at a right angle to the longitudinal axis of the carrier web (16) of the carrier carriage (14), so that the bracket hooks received between the windings (35) have a correspondingly perpendicular alignment with respect to the longitudinal axis of the carrier web (16).

6. Loading apparatus according to one or more of Claims 1 to 5, characterized in that the groove (36) between the windings (35) of the screw (31) is deep enough for the brackets (23) to be unable to be pushed out of the groove.

7. Loading apparatus according to one or more of Claims 1 to 6, characterized in that the motor (30) is mounted to be displaceable in the direction of the longitudinal axis of the screw (31), the screw (31) being rigidly coupled to the motor.

8. Loading apparatus according to Claim 7, characterized in that the telescopic rectangular tube (32) is mounted to be displaceable in the manner of a telescope on the carrier tube (33), the plastics rail (34) with the screw (31) performing the same movement as the motor (30).

9. Loading apparatus according to one or more of Claims 1 to 8, characterized in that the free region of the screw (31) on the motor side is connected to a bracket supplying device (21) by way of a slide rod (39) which runs obliquely upwards.

## Revendications

1. Dispositif de chargement pour une installation de convoyeur suspendu pour transport suspendu, à l'intérieur de l'entreprise, dans l'industrie du vêtement, comportant des rails de circulation (1) et, circulant sur eux, les cintres porteurs (13) entourant, depuis le bas les rails de circulation, au moins deux cintres porteurs étant des parties d'un chariot porteur présentant une barre support horizontale (16), et étant entendu que, pour l'appui sur le rail de circulation (1), sont disposés, sur chacun des cintres porteurs, deux galets de roulements (13a), inclinés l'un vers l'autre, et que, pour le transport automatique des chariots porteurs (14), il est prévu un dispositif de transport qui provoque l'enclenchement automatique d'organes d'accouplement disposés sur les cintres porteurs (13), caractérisé en ce que le dispositif de chargement présente une vis sans fin d'entraînement (31), qui est disposée latéralement, en formant un angle aigu entre le chariot porteur (14) et le dispositif de transport (29), étant entendu que l'extrémité libre de la vis sans fin (31) se trouve dans la zone située au-dessus de la barre porteuse (16) du chariot porteur (14) et que la vis sans fin (31) est disposée de façon à pouvoir coulisser vers l'avant et vers l'arrière.

2. Dispositif de chargement suivant la revendication 1, caractérisé en ce qu'il présente un moteur (30) qui est disposé horizontalement, et dont l'arbre est accouplé à la vis sans fin (31).

3. Dispositif de chargement suivant la revendication 1 et/ou la revendication 2, caractérisé en ce qu'à la sortie de l'arbre du moteur (30), est adapté un tube carré télescopique (32) qui recouvre, de façon télescopique, un tube support carré (33), étant entendu que la vis sans fin (31) dépasse, d'une certaine longueur, du tube support (33), et que le tube support (33) est monté sur un châssis-support 37.

4. Dispositif de chargement suivant l'une ou plusieurs des revendications 1 à 3, caractérisé en ce que la vis sans fin (31) repose sur un barreau de matière plastique (34) présentant une nervure longitudinale de guidage pour la vis sans fin (31), barreau qui traverse le tube support (33) et le tube carré télescopique (32), et qui est monté sur le moteur.

5. Dispositif de chargement suivant l'une ou plusieurs des revendications 1 à 4, caractérisé en ce que la pente des filets (35) de la vis sans fin (31) est située dans l'angle droit par rapport à l'axe longitudinal de la barre porteuse (16) du chariot porteur (14), de telle façon que les cintres pris entre les filets (35) ont, en conséquence, une direction perpendiculaire à l'axe longitudinal de la barre porteuse (16).

6. Dispositif de chargement suivant l'une ou plusieurs des revendications 1 à 5, caractérisé en ce que la nervure (36) existant entre les filets (35) de la vis sans fin (31) est assez profonde pour que les cintres (23) ne puissent pas être repoussés en dehors de la nervure.

7. Dispositif de chargement suivant l'une ou plusieurs des revendications 1 à 6, caractérisé en ce que le moteur (30) est monté de façon à pouvoir se déplacer dans la direction de l'axe longitudinal de la vis sans fin (31), cette dernière étant accouplée au moteur de façon rigide.

8. Dispositif de chargement suivant la revendication 7, caractérisé en ce que le tube carré télescopique (32) est monté sur le tube support (33), en pouvant coulisser de façon télescopique, étant entendu que le rail (34) en matière plastique effectue, avec la vis sans fin (31), le même mouvement que le moteur (30).

9. Dispositif de chargement suivant l'une ou plusieurs des revendications 1 à 8, caractérisé en ce que la zone libre de la vis sans fin (31), située du côté du moteur, est reliée avec un dispositif (21) d'alimentation des cintres, par l'intermédiaire d'une barre de glissement (39), qui est inclinée vers le haut.
